# EUROPÄISCHE PATENTSCHRIFT

(11) **EP 4 217 260 B1**
(45) Veröffentlichungstag und Bekanntmachung des Hinweises auf die Patenterteilung: **30.07.2025**
(21) Anmeldenummer: 21758098.4
(22) Anmeldetag: 05.08.2021
(51) Int. Cl.: B62J 17/10, B62J 17/02, B62J 17/06, B62K 11/04

(54) **KRAFTRAD MIT VERSTELLBAREM LUFTLEITELEMENT**
MOTORBIKE WITH ADJUSTABLE AIR DEFLECTOR
MOTO AVEC DÉFLECTEUR D'AIR RÉGLABLE

(30) Priorität: 25.09.2020 DE 102020125060
(43) Veröffentlichungstag der Anmeldung: 02.08.2023
(73) Patentinhaber: Bayerische Motoren Werke Aktiengesellschaft, 80809 München (DE)
(72) Erfinder: WEINELT, Jochen, 80992 München (DE)
(86) Internationale Anmeldenummer: PCT/EP2021/071909
(87) Internationale Veröffentlichungsnummer: WO 2022/063471

(56) Entgegenhaltungen:
- WO-A1-2006/073244
- DE-A1- 102006 020 670
- DE-U1- 8 607 843
- JP-A- 2011 031 705
- JP-U- S5 926 090
- US-A- 4 536 005
- US-A1- 2010 301 627
- US-A1- 2011 233 956

## Beschreibung

Die Erfindung betrifft ein Kraftrad mit einem verstellbaren Luftleitelement gemäß dem Oberbegriff des Patentanspruchs 1.

Es sind Krafträder, wie Motorräder, bekannt, die zusätzlich zu einer Fahrzeugkarosserie weitere Luftleitelemente aufweisen, um eine Fahrzeugumströmung zu beeinflussen und auf diese Weise beispielsweise einen Wind- und Wetterschutz für den Fahrer und/oder einen Beifahrer bereitzustellen.

So ist aus der EP 0 685 385 B1 ein elektrisch oder hydraulisch verstellbares Windschild bekannt, welches in Höhenrichtung zwischen einer oberen und unteren Position bewegbar ist, um einen Fahrtwind je nach Bedarf umzuleiten. Ein Fahrer kann dementsprechend in unterschiedlichem Maße vor dem Fahrtwind, Nässe und aufgewirbeltem Schmutz geschützt werden.

Des Weiteren sind mechanisch, elektrisch oder hydraulisch verstellbare Karosserieteile bekannt, die vom Fahrer bei entsprechendem Bedarf und Fahrzustand in eine gewünschte Stellung gebracht werden können. Jedoch sind derartige Vorrichtungen aufwendig und benötigen stets eine aktive Betätigung durch den Fahrer und eine ansteuernde Elektronik und/oder Mechanik. Eine Betätigung während der Fahrt ist daher meist nicht (ohne weiteres) möglich.

Die DE 10 2006 020 670 A1 betrifft ein gattungsgemäße Motorrad mit einer seitlich am Motorrad angeordneten Fußraste und einem Verkleidungselement, das in einem Bereich vorderhalb der Fußraste angeordnet ist. Das Verkleidungselement ist schwenkbar angeordnet und kann von einer eingeklappten Stellung in eine ausgeklappte Stellung oder umgekehrt verschwenkt werden.

Die JP 2011 031705 A offenbart einen Motorroller mit einem verstellbaren Windschild.

Die WO 2006/073244 A1 betrifft ein Motorrad mit einem verstellbaren Spoiler. Insbesondere soll der Abtrieb bei Kurvenfahrt erhöht werden.

Die US 2010/0301627 A1 betrifft ein Motorrad mit einem verstellbaren, federbelasteten Klappenelement, wobei eine Feder das Klappenelement in einer Schließposition hält und wobei der Luftwiderstand das Klappenelement in eine geöffnete Position verlagern kann.

Die JP 2011031705 A betrifft ein Motorrad mit einem verstellbaren Windschild.

Die DE 86 07 843 U1 betrifft einen Windschutzschild, bestehend aus einer Windschutzscheibe oder aus einer mit einem Rahmen verbundenen bzw. mit diesem integrierten Windschutzscheibe, für das Vorderteil eines Motorrads, insbesondere als in eine Motorradverkleidung integriertes Teil.

Die US 4 536 005 A betrifft einen Motorroller mit verstellbaren Verkleidungsteilen. Die US 2011/233956 A1 betrifft ein Motorrad mit ausstellbaren Verkleidungselementen.

Eine Aufgabe der Erfindung ist es, ein verstellbares Luftleitelement für ein Kraftrad bereitzustellen, welches einfach und kostengünstig hergestellt werden kann und darüber hinaus einen möglichst geringen Betätigungsaufwand für den Nutzer (im Folgenden auch gleichbedeutend "Fahrzeugnutzer" genannt) erfordert.

Diese Aufgabe wird gelöst mit einem Kraftrad gemäß dem Gegenstand des Patentanspruchs 1. Vorteilhafte Ausführungsformen ergeben sich aus den abhängigen Ansprüchen.

Demnach wird ein Kraftrad mit einem verstellbaren Luftleitelement bereitgestellt, wobei das Luftleitelement einen Wurzelabschnitt, welcher mit einer Karosserie und/oder einer Fahrzeugstruktur des Kraftrades verbunden ist, und einen Luftleitabschnitt aufweist, der sich von dem Wurzelabschnitt bis zu einem freien Ende des Luftleitelements erstreckt. Außerdem ist der Luftleitabschnitt zwischen einer ausgestellten Position und einer angestellten Position relativbeweglich zu der Karosserie und/oder der Fahrzeugstruktur und ist mittels eines federelastischen Stützelements an der Karosserie und/oder der Fahrzeugstruktur abgestützt.

Als Kraftrad im Sinne der Erfindung werden insbesondere Motorräder oder Motorroller beziehungsweise Scooter verstanden, einschließlich zwei-, drei- oder vierrädriger Motorroller, sowie außerdem Trikes, Quads und dergleichen.

Das Luftleitelement ist beispielsweise an einem äußeren Bereich des Kraftrades, vorzugsweise an einer Fahrzeugseite oder in einem Frontbereich, angeordnet und mit dem Wurzelabschnitt fahrzeugseitig befestigt. Die Befestigung sieht eine Verbindung mit der Karosserie des Kraftrades und/oder mit der Fahrzeugstruktur des Kraftrades vor. Selbstverständlich kann das Kraftrad mehr als ein entsprechend ausgebildetes verstellbares Luftleitelement umfassen.

Das Luftleitelement erstreckt sich von dem Wurzelabschnitt bis zu einem freien Ende. Das freie Ende kann beispielsweise von einem von dem Kraftrad abgewandten, entfernten Ende des Luftleitelements gebildet werden.

Zudem ist zumindest der Luftleitabschnitt des Luftleitelements relativbeweglich ausgebildet und kann entsprechend zwischen der ausgestellten Position und der angestellten Position relativ zu dem restlichen Fahrzeug bewegt werden. In der ausgestellten Position ist insbesondere ein Abstand des freien Endes von dem restlichen Fahrzeug größer als dessen Abstand in der angestellten Position. In der angestellten Position kann der Luftleitabschnitt beispielsweise nahe an einer äußeren Oberfläche der Karosserie angeordnet sein, oder in dieser äußeren Oberfläche (vorzugsweise bündig) integriert sein. Die Bewegung zwischen der ausgestellten Position und der angestellten Position kann selbstverständlich in beide Richtungen erflogen, zudem können optional beliebig viele Zwischenpositionen vorgesehen sein. Die Bewegung kann vorzugsweise stufenlos, alternativ aber auch in definierten Stufen und Zwischenstufen zur Einstellung der jeweiligen Positionen erfolgen.

Im Rahmen der Relativbewegung des Luftleitabschnitts kann das federelastische Stützelement in seiner Form verändert, also verformt werden, um in allen Positionen und den eventuellen Zwischenpositionen eine Abstützung an der Karosserie und/oder der Fahrzeugstruktur bereitzustellen. Das federelastische Stützelement kann hierzu den Luftleitabschnitt mit einer Rückstellkraft beaufschlagen, um diesen stets aus der angestellten Position in die ausgestellte Position zu bewegen.

Auf diese Weise kann der Luftleitabschnitt - bei entsprechender Ausgestaltung des Stützelements - allein durch diese Rückstellkraft selbsttätig aus der angestellten Position in die ausgestellte Position bewegt werden, ohne dass eine aktive Betätigung durch den Fahrzeugnutzer erforderlich wäre.

Dies bietet die Möglichkeit, dass der Luftleitabschnitt passiv und rein geschwindigkeitsgesteuert bewegt wird, da bei einer geringen Geschwindigkeit eine geringere Beaufschlagung mit einem Fahrtwind erfolgt und sich dadurch das Stützelement in der ausgestellten Position befindet. Steigt ein Winddruck durch einen mit zunehmender Fahrzeuggeschwindigkeit ansteigenden Fahrtwind an, so wirkt der Winddruck gegen die Rückstellkraft. Übersteigt der Winddruck die Rückstellkraft, so wird der Luftleitabschnitt in zunehmendem Maße angestellt und in Richtung der angestellten Position relativ zu dem restlichen Fahrzeug bewegt.

Mit zunehmender Anstellung des Luftleitabschnitts wird eine aerodynamische Strömungsbeeinflussung reduziert, so dass in der angestellten Position eine möglichst geringe Strömungsbeeinflussung erfolgt. Dagegen befindet sich der Luftleitabschnitt bei der geringeren Fahrzeuggeschwindigkeit in der ausgestellten Position und stellt eine aerodynamische Strömungsbeeinflussung bereit. Diese kann - je nach Anordnung des Luftleitelements - beispielsweise dazu genutzt werden, den Nutzer des Kraftrades unter anderem vor dem Fahrtwind oder aufgewirbeltem Schmutz und Nässe zu schützen.

Zum Beispiel kann die Verbindung des Wurzelabschnitts mit der Karosserie und/oder der Fahrzeugstruktur entweder als starre Verbindung oder als gelenkige Verbindung ausgebildet sein. Im Falle einer starren Verbindung bildet der Wurzelabschnitt ein Festlager, welches unbeweglich ausgebildet ist. Die Relativbewegung des Luftleitabschnitts kann in diesem Fall durch eine elastische Verformung des Luftleitabschnitts bereitgestellt werden. Hierzu ist der Luftleitabschnitt entlang seiner gesamten Länge zwischen dem Wurzelabschnitt und dem freien Ende, oder lediglich in einem oder mehreren Abschnitten elastisch verformbar ausgebildet.

Die Verformbarkeit kann derart abgestimmt sein, dass diese durch aerodynamische Kräfte erzielt werden kann, die typischerweise beim Betrieb des Kraftrades, also insbesondere durch den Winddruck des Fahrtwinds, auftreten.

Gemäß der alternativen Ausgestaltung der beschriebenen gelenkigen Verbindung kann der Wurzelbereich ein Gelenk aufweisen, welches einerseits mit dem Luftleitabschnitt und andererseits fahrzeugseitig befestigt ist. Das Gelenk kann beispielsweise als axiales Gelenk, wie einem Scharnier, oder auch als Kugelgelenk ausgebildet sein. Als gelenkige Verbindung soll im Sinne dieser Erfindung auch ein sogenanntes Filmscharnier angesehen werden. Im Falle der gelenkigen Verbindung kann der Luftleitabschnitt steif beziehungsweise starr ausgebildet sein. Alternativ kann dieser aber ebenfalls entlang seiner gesamten Länge zwischen dem Wurzelabschnitt und dem freien Ende, oder lediglich in einem oder mehreren Abschnitten elastisch verformbar ausgebildet sein.

Vorzugsweise kann in jeder der beschriebenen Ausführungsformen der Wurzelabschnitt in Fahrzeuglängsrichtung vor dem Luftleitabschnitt angeordnet sein. Auf diese Weise kann sichergestellt werden, dass ein zunehmender Fahrtwind eine zunehmende Winddruckbeaufschlagung des Luftleitabschnitts und eine entsprechend zunehmende Anstellung an das Kraftrad bewirkt.

Vorzugsweise kann das Luftleitelement in der ausgestellten Position zur Reduktion einer Strömungsbeaufschlagung des Fahrzeugnutzers ausgebildet sein. Hierzu kann jeweils mindestens ein Luftleitelement auf der jeweiligen Fahrzeugseite des Kraftrades in Längsrichtung des Fahrzeugs vor dem Nutzer angeordnet sein.

Insbesondere kann das jeweilige Luftleitelement in einem Bereich vor dem Fuß, dem Schienbein, dem Knie, dem Oberschenkel und/oder der Hüfte des Nutzers angeordnet sein, um das jeweilige Körperteil in der ausgestellten Position vollständig oder zumindest teilweise zu schützen.

Zum Beispiel kann das Luftleitelement in Fahrzeuglängsrichtung zwischen einem Vorderrad und einem Beinabschnitt des Nutzers angeordnet sein.

Hierzu ist insbesondere eine Anordnung des Luftleitelements im Bereich eines Fahrzeugkühlers möglich.

Gemäß einer Ausführungsform kann das Stützelement mit einer Innenseite des Luftleitabschnitts verbunden sein. Zum Beispiel ist das Stützelement zwischen der Innenseite des Luftleitabschnitts und einer der Innenseite zugewandten äußeren Oberfläche der Karosserie oder einer der Innenseite zugewandten Fahrzeugstruktur angeordnet und jeweils mit diesen Bauteilen verbunden.

Zum Beispiel kann das Stützelement ein Federelement zum Bereitstellen einer Rückstellkraft umfassen, um den Luftleitabschnitt aus der angestellten Position in die ausgestellte Position zu bewegen.

Ist das Federelement als Druckfeder ausgebildet, kann das Luftleitelement beziehungsweise dessen Luftleitabschnitt in die ausgestellte Position und damit vom Fahrzeug weg gedrückt werden.

In jedem Fall kann eine Rückstellkraft des federelastischen Stützelements, insbesondere eine Federkraft des Federelements, so ausgelegt sein, dass bei einer Erhöhung der Geschwindigkeit der damit erhöhte Winddruck auf das ausgestellte Luftleitelement die Rückstellkraft übersteigt und somit der Luftleitabschnitt in die angestellte Position bewegt wird.

So kann das Luftleitelement derart abgestimmt sein, dass sich der Luftleitabschnitt zumindest ab einer definierten (ersten) Fahrzeuggeschwindigkeit in der angestellten Position befindet. Diese kann zum Beispiel ausgewählt sein aus einem Bereich zwischen 120 und 180 Km/h, vorzugsweise zwischen 120 und 160 km/h. Dies bedeutet, dass zumindest ab diesem Geschwindigkeitswert, der aus den genannten Bereichen gewählt ist, der Luftleitabschnitt in der angestellten Position angeordnet ist, wodurch ein Luftwiderstandsbeiwert (CxA) gering ist.

Wird die Geschwindigkeit des Kraftrades reduziert, wird der angestellte Luftleitabschnitt aufgrund der Rückstellkraft des federelastischen Stützelements wieder in die ausgestellte Position gedrückt.

So kann das Luftleitelement derart abgestimmt sein, dass sich der Luftleitabschnitt zumindest bis zu einer definierten (zweiten) Fahrzeuggeschwindigkeit in der ausgestellten Position befindet. Diese kann zum Beispiel ausgewählt sein aus einem Bereich zwischen 30 und 120 Km/h, vorzugsweise zwischen 50 und 120 km/h. Dies bedeutet, dass zumindest bis zu diesem Geschwindigkeitswert, der aus den genannten Bereichen gewählt ist, der Luftleitabschnitt in der ausgestellten Position angeordnet ist, um den Nutzer entsprechend zu schützen.

Es versteht sich, dass die beiden Fahrzeuggeschwindigkeiten jeweils derart ausgewählt werden, dass die definierte (erste) Fahrzeuggeschwindigkeit, ab der der Luftleitabschnitt in der angestellten Position angeordnet ist, größer ist als die definierte (zweite) Fahrzeuggeschwindigkeit, bis zu der der Luftleitabschnitt in der ausgestellten Position angeordnet ist beziehungsweise bleibt.

Das beschriebene Luftleitelement bietet somit die Möglichkeit beispielsweise bei einer Regenfahrt die Geschwindigkeit den Straßenverhältnissen anzupassen und somit zu drosseln. Der Nutzer wird durch den entsprechend ausgestellten Luftleitabschnitt geschützt. Ermöglichen dagegen bei trockenem Wetter die Straßenverhältnisse eine höhere Fahrgeschwindigkeit, wird der Luftleitabschnitt durch den entsprechend erhöhten Winddruck des Fahrtwindes in die angestellte Position gebracht, um die aerodynamischen und fahrdynamischen Eigenschaften des Kraftrades zu verbessern.

Die Erfindung wird nachfolgend anhand eines Ausführungsbeispiels unter Bezugnahme auf die Zeichnungen näher erläutert. Es zeigen:
- Fig. 1:: eine Seitenansicht eines Kraftrades gemäß der Beschreibung,
- Fig. 2:: eine Draufsicht des Kraftrads gemäß Fig. 1 mit Luftleitabschnitten in angestellter Position, und
- Fig. 3:: eine Draufsicht des Kraftrads gemäß Fig. 1 mit Luftleitabschnitten in ausgestellter Position.

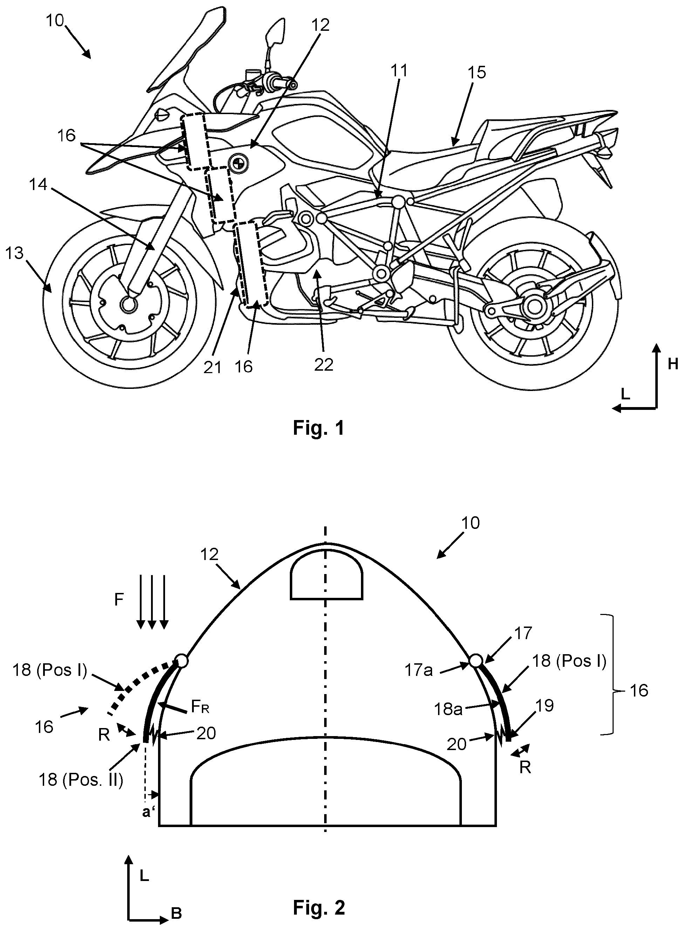

Fig. 1 zeigt eine Seitenansicht eines lediglich schematisch dargestellten Kraftrades 10, welches beispielhaft als Motorrad ausgebildet ist. Das Motorrad 10 umfasst eine Fahrzeugstruktur 11, die unter anderem einen Fahrzeugrahmen umfasst, sowie eine die Fahrzeugstruktur 11 teilweise verkleidende Karosserie 12.

In Fahrzeuglängsrichtung L zwischen einem Vorderrad 13 beziehungsweise dessen Vorderradaufhängung 14 und einem Sitzbereich 15 eines Nutzers sind auf der in Fig. 1 sichtbaren Fahrzeugseite (linke Fahrzeugseite) beispielhaft drei Luftleitelemente 16 an der Karosserie 12 vorgesehen. Es versteht sich, dass anstelle der drei Luftleitelement 16 lediglich ein einzelnes, zwei, oder mehr als drei Luftleitelemente 16 vorgesehen werden können. Außerdem können an der nicht-sichtbaren, abgewandten Fahrzeugseite (rechte Fahrzeugseite) ebenfalls entsprechende Luftleitelemente vorgesehen sein.

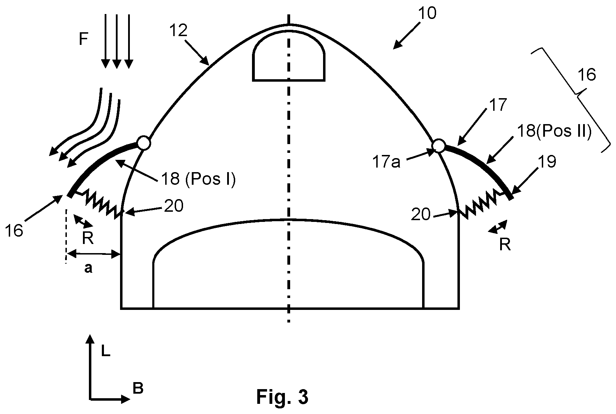

In den folgenden Fig. 2 und 3 ist der Übersichtlichkeit halber lediglich ein Luftleitelement 16 pro Fahrzeugseite dargestellt. Selbstverständlich können aber auch dort mehr als das eine Luftleitelement 16 vorgesehen werden.

Jedes der dargestellten Luftleitelemente 16 ist als verstellbares Luftleitelement 16 ausgebildet und umfasst jeweils einen Wurzelabschnitt 17, welcher mit der Karosserie 12 des Kraftrades 10 verbunden ist, und einen Luftleitabschnitt 18 aufweist, der sich von dem Wurzelabschnitt 17 bis zu einem freien Ende 19 des Luftleitelements 16 erstreckt. Außerdem ist der Luftleitabschnitt 18 des jeweiligen Luftleitelements 16 zwischen einer ausgestellten Position I (dargestellt in Fig. 3) und einer angestellten Position II (dargestellt in Fig. 2) relativbeweglich (Bewegungspfeil R) zu der Karosserie 12 beziehungsweise der Fahrzeugstruktur 11 und ist mittels eines federelastischen Stützelements 20 an der Karosserie 12 abgestützt. Alternativ oder zusätzlich kann eine Abstützung an der Fahrzeugstruktur 11 vorgesehen sein.

Aufgrund der Relativbeweglichkeit R kann jeder Luftleitabschnitt 18 entsprechend zwischen der ausgestellten Position I und der angestellten Position II relativ zu dem restlichen Fahrzeug 10 bewegt werden, wobei in der ausgestellten Position I ein Abstand a des freien Endes 19 von dem restlichen Fahrzeug 10 größer ist als ein Abstand a' in der angestellten Position II. Folglich ist in der angestellten Position II der Luftleitabschnitt 18 nahe an einer äußeren Oberfläche der Karosserie 12 angeordnet. Alternativ und daher nicht dargestellt ist eine Ausführungsform, bei welcher der Luftleitabschnitt 18 in der äußeren Oberfläche der Karosserie 12 (vorzugsweise bündig) integriert ist.

Wie aus Fig. 2 ersichtlich, wird im Rahmen der Relativbewegung R des jeweiligen Luftleitabschnitts 18 das zugeordnete federelastische Stützelement 20 verformt, so dass in allen Positionen und Zwischenpositionen eine Abstützung an der Karosserie 12 erzielt wird. Das jeweilige federelastische Stützelement 20 beaufschlägt hierzu den jeweiligen Luftleitabschnitt 18 mit einer Rückstellkraft F_{R}, um diesen auf diese Weise selbständig aus der angestellten Position II gemäß Fig. 2 in die ausgestellte Position I gemäß Fig. 3 zu bewegen.

Gemäß Fig. 2 und 3 ist das jeweilige Stützelement 20 mit einer Innenseite 18a des Luftleitabschnitts 18 verbunden, indem das Stützelement 20 zwischen der Innenseite 18a des Luftleitabschnitts 18 und einer der Innenseite 18a zugewandten, äußeren Oberfläche der Karosserie 12 angeordnet und verbunden ist. Das Stützelement 20 ist beispielhaft als Druckfeder ausgestaltetes Federelement dargestellt, um die Rückstellkraft F_{R} bereitzustellen.

Die Rückstellkraft F_{R} ist vorzugweise so ausgelegt, dass bei einer Erhöhung der Geschwindigkeit des Kraftrads 10 der damit erhöhte, durch den Fahrtwind F erzeugte Winddruck auf das ausgestellte Luftleitelement 16 die Rückstellkraft F_{R} übersteigt und somit der Luftleitabschnitt 18 in die angestellte Position II bewegt wird. So kann das Luftleitelement 16 derart abgestimmt sein, dass sich der Luftleitabschnitt 18 zumindest ab einer definierten ersten Fahrzeuggeschwindigkeit, beispielsweise ausgewählt aus einem Bereich zwischen 120 und 180 Km/h, vorzugsweise zwischen 120 und 160 km/h, in der angestellten Position II befindet. Mit zunehmender Anstellung des Luftleitabschnitts 18 wird eine aerodynamische Strömungsbeeinflussung reduziert, so dass in der angestellten Position II eine möglichst geringe Strömungsbeeinflussung erfolgt.

Dagegen stellt der jeweilige Luftleitabschnitt 18 bei der geringeren Fahrzeuggeschwindigkeit eine aerodynamische Strömungsbeeinflussung bereit.

Wird nämlich die Geschwindigkeit des Kraftrades 10 reduziert, wird der angestellte Luftleitabschnitt 18 aufgrund der Rückstellkraft F_{R} des federelastischen Stützelements 20 wieder in die ausgestellte Position I gedrückt. So kann das Luftleitelement 16 derart abgestimmt sein, dass sich der Luftleitabschnitt 18 zumindest bis zu einer definierten zweiten Fahrzeuggeschwindigkeit, beispielsweise ausgewählt aus einem Bereich zwischen 30 und 120 Km/h, vorzugsweise zwischen 50 und 120 km/h, in der ausgestellten Position I befindet. Diese kann - je nach Anordnung des Luftleitelements 16 am Kraftrad 10 - beispielsweise dazu genutzt werden, den Nutzer des Kraftrades 10 unter anderem vor dem Fahrtwind F oder aufgewirbeltem Schmutz und Nässe zu schützen.

Eine aktive Betätigung durch den Nutzer ist somit in keinem der Fälle erforderlich.

Wie in den Fig. 2 und 3 beispielhaft dargestellt, ist die Verbindung des Wurzelabschnitts 17 mit der Karosserie 12 als gelenkige Verbindung 17a ausgebildet. Hierzu umfasst der Wurzelbereich 17 ein Gelenk 17a, welches einerseits mit dem Luftleitabschnitt 18 und andererseits fahrzeugseitig (hier: an der Karosserie 12) befestigt ist. Das Gelenk 17a ist beispielhaft als axiales Gelenk, wie einem Scharnier, dargestellt, kann alternativ aber auch als Kugelgelenk oder Filmscharnier ausgebildet sein.

Aufgrund der gelenkigen Verbindung 17a kann der Luftleitabschnitt 18 steif beziehungsweise starr ausgebildet sein. Alternativ kann dieser entlang seiner gesamten Länge zwischen dem Wurzelabschnitt 17 und dem freien Ende 19, oder lediglich in einem oder mehreren Abschnitten elastisch verformbar ausgebildet sein.

Zur Erzielung der beschriebenen Funktionsweise ist der Wurzelabschnitt 17 in Fahrzeuglängsrichtung L vor dem Luftleitabschnitt 18 angeordnet.

Wie beschrieben, ermöglicht es die dargestellte Ausführungsform, dass das jeweilige Luftleitelement 16 in der ausgestellten Position I eine Reduktion einer Strömungsbeaufschlagung des Fahrzeugnutzers bewirkt. Hierzu ist das jeweilige Luftleitelement 16 auf der jeweiligen Fahrzeugseite des Kraftrades 10 in Fahrzeuglängsrichtung L vor dem Nutzer angeordnet.

In Fig.1 sind drei beispielhafte Anordnungen der Luftleitelemente 16 dargestellt. Demnach ist ein erstes Luftleitelement 16 in einem Bereich vor dem Fuß beziehungsweise dem Schienbein des Nutzers positioniert. Dieses ist außerdem im Bereich eines Fahrzeugkühlers 21 vorgesehen. Ein weiteres Luftleitelement 16 ist in einem Bereich vor dem Knie beziehungsweise dem Oberschenkel vorgesehen und ein drittes Luftleitelement 16 in einem Bereich vor der Hüfte des Nutzers, um das jeweilige Körperteil in der ausgestellten Position I vollständig oder zumindest teilweise zu schützen.

Alle drei Luftleitelemente 16 sind bezogen auf die Fahrzeuglängsrichtung L des Kraftrads 10 zwischen dem Vorderrad 13 und einem für das Bein des Nutzers vorgesehenen Beinabschnitt 22 angeordnet.

Es versteht sich, dass die Luftleitelemente 16 in beliebiger Anzahl und Kombination dieser Anordnungen (und/oder anderer Anordnungen) am Kraftrad 10 vorgesehen werden können.

## Patentansprüche

1. Kraftrad (10) mit einem verstellbaren Luftleitelement (16), wobei das Luftleitelement (16) einen Wurzelabschnitt (17), welcher mit einer Karosserie (12) und/oder einer Fahrzeugstruktur (11) des Kraftrades (10) verbunden ist, und einen Luftleitabschnitt (18) aufweist, der sich von dem Wurzelabschnitt (17) bis zu einem freien Ende (19) des Luftleitelements (16) erstreckt, wobei der Luftleitabschnitt (18) zwischen einer ausgestellten Position (I) und einer angestellten Position (II) relativbeweglich zu der Karosserie (12) und/oder der Fahrzeugstruktur (11) ist und mittels eines federelastischen Stützelements (20) an der Karosserie (12) und/oder der Fahrzeugstruktur (11) abgestützt ist,
**dadurch gekennzeichnet, dass**
eine Rückstellkraft des federelastischen Stützelements (20) so ausgelegt ist, dass bei einer Erhöhung der Geschwindigkeit des Kraftrads (10) der damit erhöhte Winddruck auf das ausgestellte Luftleitelement (16) die Rückstellkraft übersteigt und somit der Luftleitabschnitt (18) in die angestellte Position bewegt wird, und
wobei der angestellte Luftleitabschnitt (18) bei sich reduzierender Geschwindigkeit aufgrund der Rückstellkraft des federelastischen Stützelements (20) wieder in die ausgestellte Position gedrückt wird.

2. Kraftrad (10) nach Anspruch 1, **dadurch gekennzeichnet, dass** die Verbindung des Wurzelabschnitts (17) mit der Karosserie (12) und/oder der Fahrzeugstruktur (11) als starre Verbindung oder als gelenkige Verbindung ausgebildet ist.

3. Kraftrad (10) nach Anspruch 1 oder 2, **dadurch gekennzeichnet, dass** der Wurzelabschnitt (17) in Fahrzeuglängsrichtung (L) vor dem Luftleitabschnitt (18) angeordnet ist.

4. Kraftrad (10) nach mindestens einem der Ansprüche 1 bis 3, **dadurch gekennzeichnet, dass** das Stützelement (20) mit einer Innenseite (18a) des Luftleitabschnitts (18) verbunden ist.

5. Kraftrad (10) nach mindestens einem der Ansprüche 1 bis 4, **dadurch gekennzeichnet, dass** das Stützelement (20) ein Federelement zum Bereitstellen einer Rückstellkraft (F_{R}) umfasst, um den Luftleitabschnitt (18) aus der angestellten Position (II) in die ausgestellte Position (I) zu bewegen.

6. Kraftrad (10) nach mindestens einem der Ansprüche 1 bis 5, **dadurch gekennzeichnet, dass** das Luftleitelement (18) in der ausgestellten Position (I) zur Reduktion einer Strömungsbeaufschlagung eines Fahrzeugnutzers ausgebildet ist.

7. Kraftrad (10) nach mindestens einem der Ansprüche 1 bis 6, **dadurch gekennzeichnet, dass** das Luftleitelement (16) in Fahrzeuglängsrichtung (L) zwischen einem Vorderrad (13) und einem für ein Bein des Fahrzeugnutzers vorgesehenen Beinabschnitt (22) angeordnet ist.

8. Kraftrad (10) nach mindestens einem der Ansprüche 1 bis 7, **dadurch gekennzeichnet, dass** das Luftleitelement (16) derart abgestimmt ist, dass sich der Luftleitabschnitt (18) zumindest ab einer definierten ersten Fahrzeuggeschwindigkeit, ausgewählt aus einem Bereich zwischen 120 und 180 Km/h, vorzugsweise zwischen 120 und 160 km/h, in der angestellten Position (II) befindet.

9. Kraftrad (10) nach mindestens einem der Ansprüche 1 bis 8, **dadurch gekennzeichnet, dass** das Luftleitelement (16) derart abgestimmt ist, dass sich der Luftleitabschnitt (18) zumindest bis zu einer definierten zweiten Fahrzeuggeschwindigkeit, ausgewählt aus einem Bereich zwischen 30 und 120 Km/h, vorzugsweise zwischen 50 und 120 km/h, in der ausgestellten Position (I) befindet.

## Claims

1. Motorcycle (10) having an adjustable air-guiding element (16), wherein the air-guiding element (16) has a root section (17) which is connected to a body (12) and/or a vehicle structure (11) of the motorcycle (10), and an air-guiding section (18) which extends from the root section (17) as far as a free end (19) of the air-guiding element (16),
wherein the air-guiding section (18) is movable relative to the body (12) and/or the vehicle structure (11) between a deployed position (I) and a retracted position (II) and is supported on the body (12) and/or the vehicle structure (11) by means of a spring-elastic support element (20),
**characterized in that**
a restoring force of the spring-elastic support element (20) is designed such that, in the event of an increase in the speed of the motorcycle (10), the wind pressure thus increased on the deployed air-guiding element (16) exceeds the restoring force and thus the air-guiding section (18) is moved into the retracted position, and
wherein the retracted air-guiding section (18) is pressed back into the deployed position on account of the restoring force of the spring-elastic support element (20) in the case of a reducing speed.

2. Motorcycle (10) according to Claim 1, **characterized in that** the connection of the root section (17) to the body (12) and/or to the vehicle structure (11) is formed as a rigid connection or as an articulated connection.

3. Motorcycle (10) according to Claim 1 or 2, **characterized in that** the root section (17) is arranged in front of the air-guiding section (18) in the longitudinal direction (L) of the vehicle.

4. Motorcycle (10) according to at least one of Claims 1 to **3, characterized in that** the support element (20) is connected to an inner side (18a) of the air-guiding section (18).

5. Motorcycle (10) according to at least one of Claims 1 to 4, **characterized in that** the support element (20) comprises a spring element for providing a restoring force (F_{R}) in order to move the air-guiding section (18) from the retracted position (II) into the deployed position (I).

6. Motorcycle (10) according to at least one of Claims 1 to 5, **characterized in that**, in the deployed position (I), the air-guiding element (18) is designed to reduce flow impingement on a vehicle user.

7. Motorcycle (10) according to at least one of Claims 1 to **6, characterized in that** the air-guiding element (16) is arranged in the vehicle longitudinal direction (L) between a front wheel (13) and a leg section (22) provided for a leg of the vehicle user.

8. Motorcycle (10) according to at least one of Claims 1 to 7, **characterized in that** the air-guiding element (16) is matched in such a way that the air-guiding section (18) is situated in the retracted position (II) at least from a defined first vehicle speed, selected from a range between 120 and 180 km/h, preferably between 120 and 160 km/h.

9. Motorcycle (10) according to at least one of Claims 1 to 8, **characterized in that** the air-guiding element (16) is matched in such a way that the air-guiding section (18) is situated in the deployed position (I) at least up to a defined second vehicle speed, selected from a range between 30 and 120 km/h, preferably between 50 and 120 km/h.

## Revendications

1. Motocyclette (10) avec un élément de guidage d'air (16) ajustable, l'élément de guidage d'air (16) comportant une section de base (17), qui est reliée à une carrosserie (12) et/ou à une structure de véhicule (11) de la motocyclette (10), et une section de guidage d'air (18), qui s'étend depuis la section de base (17) jusqu'à une extrémité libre (19) de l'élément de guidage d'air (16),
la section de guidage d'air (18) étant relativement mobile par rapport à la carrosserie (12) et/ou à la structure de véhicule (11) entre une position déployée (I) et une position rabattue (II) et prenant appui sur la carrosserie (12) et/ou la structure de véhicule (11) au moyen d'un élément de support (20) élastique à ressorts,
**caractérisée en ce que**
une force de rappel de l'élément de support (20) élastique à ressorts est conçue de telle sorte que, lors d'une augmentation de la vitesse de la motocyclette (10), la pression du vent ainsi augmentée sur l'élément de guidage d'air (16) rabattu dépasse la force de rappel et, ainsi, la section de guidage d'air (18) est déplacée dans la position rabattue, et
la section de guidage d'air (18) rabattue étant poussée à nouveau dans la position déployée lorsque la vitesse diminue en raison de la force de rappel de l'élément de support (20) élastique à ressorts.

2. Motocyclette (10) selon la revendication 1, **caractérisée en ce que** la liaison de la section de base (17) à la carrosserie (12) et/ou à la structure de véhicule (11) est réalisée comme une liaison rigide ou une liaison articulée.

3. Motocyclette (10) selon la revendication 1 ou **2, caractérisée en ce que** la section de base (17) est disposée devant la section de guidage d'air (18) dans le sens longitudinal (L) du véhicule.

4. Motocyclette (10) selon au moins l'une des revendications 1 à **3, caractérisée en ce que l'élément** de support (20) est relié à un côté intérieur (18a) de la section de guidage d'air (18).

5. Motocyclette (10) selon au moins l'une des revendications 1 à **4, caractérisée en ce que l'élément** de support (20) comprend un élément à ressorts destiné à fournir une force de rappel (Fᵣ) pour déplacer la section de guidage d'air (18) de la position déployée (II) dans la position rabattue (I).

6. Motocyclette (10) selon au moins l'une des revendications 1 à 5, **caractérisée en ce que** l'élément de guidage d'air (18) est réalisé pour réduire l'exposition d'un utilisateur du véhicule à un écoulement dans la position déployée (I).

7. Motocyclette (10) selon au moins l'une des revendications 1 à 6, **caractérisée en ce que** l'élément de guidage d'air (16) est disposé, dans le sens longitudinal (L) du véhicule, entre une roue avant (13) et une section de jambe (22) prévue pour une jambe de l'utilisateur du véhicule.

8. Motocyclette (10) selon au moins l'une des revendications 1 à 7, **caractérisée en ce que** l'élément de guidage d'air (16) est adapté de telle manière que la section de guidage d'air (18) se trouve dans la position rabattue (II) au moins à partir d'une première vitesse définie du véhicule, choisie dans une plage entre 120 et 180 km/h, de préférence entre 120 et 160 km/h.

9. Motocyclette (10) selon au moins l'une des revendications 1 à 8, **caractérisée en ce que** l'élément de guidage d'air (16) est adapté de telle manière que la section de guidage d'air (18) se trouve dans la position déployée (I) au moins à partir d'une deuxième vitesse définie du véhicule, choisie dans une plage entre 30 et 120 km/h, de préférence entre 50 et 120 km/h.
